(19) Europäisches Patentamt
European Patent Office
Office européen des brevets

(11) **EP 4 197 307 B1**

(12) **EUROPÄISCHE PATENTSCHRIFT**

(45) Veröffentlichungstag und Bekanntmachung des Hinweises auf die Patenterteilung:
**30.10.2024  Patentblatt 2024/44**

(21) Anmeldenummer: **22197817.4**

(22) Anmeldetag: **26.09.2022**

(51) Internationale Patentklassifikation (IPC):
**A01D 34/00** (2006.01)   **A01C 1/00** (2006.01)
**A01F 25/18** (2006.01)   **A01D 41/127** (2006.01)
**A01F 25/00** (2006.01)   **A01D 41/00** (2006.01)
**A01D 43/00** (2006.01)   **A01D 45/00** (2018.01)

(52) Gemeinsame Patentklassifikation (CPC):
**A01D 34/00; A01D 41/00; A01D 41/127; A01D 43/00; A01D 45/00; A01F 25/00; A01F 25/186**

(54) **VERFAHREN ZUR ERMITTLUNG EINER DICHTE EINES ERNTEGUTES**

METHOD FOR DETERMINING A DENSITY OF A CROP

PROCÉDÉ DE DÉTERMINATION D'UNE DENSITÉ D'UN PRODUIT DE RÉCOLTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2021   DE 102021133187**

(43) Veröffentlichungstag der Anmeldung:
**21.06.2023   Patentblatt 2023/25**

(73) Patentinhaber: **Deere & Company**
**Moline, IL 61265 (US)**

(72) Erfinder:
• **Brocke, Stefan**
  **Mannheim (DE)**
• **Fritz, Norbert**
  **Mannheim (DE)**
• **Wagh, Rasika**
  **Mannheim (DE)**
• **Koparde, Prashant**
  **Mannheim (DE)**
• **Sewalkar, Swarupanand**
  **Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 0 843 959        WO-A1-2019/169434**
**DE-A1- 102020 110 297   SE-A1- 1 950 046**
**US-B2- 10 595 459**

## Beschreibung

Die Erfindung betrifft ein Verfahren zur Ermittlung einer Dichte eines Erntegutes mit den Merkmalen des Oberbegriffs des Patentanspruches 1.

Aus DE 10 2020 110 297 A1 ist es bekannt, während einer Verdichtung von Silage in einem Silo die Dichte der Silage zu erfassen. Hierzu wird ein mit Radarwellen arbeitender Sensor eingesetzt, der an der Vorderseite eines Verdichtungsfahrzeugs angebracht sein kann.

Der vorliegenden Erfindung liegt die Aufgabe zugrunde, die Dichte eines Erntegutes technisch effizient zu ermitteln.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 ist bei einem Verfahren zur Ermittlung der Dichte eines Erntegutes bzw. Biomaterials vorgesehen, dass von einer Sendeeinheit (z.B. Sendeantenne) einer Radar-Sensorik in das verdichtete Erntegut eindringende Radarsignale gesendet werden. Von einer Empfangseinheit (z.B. Empfangsantenne) der Radar-Sensorik werden die von dem verdichteten Erntegut reflektierten Radarsignale empfangen. In Abhängigkeit von den empfangenen (und ggf. technisch bearbeiteten) reflektierten Radarsignalen wird in einer Auswerteeinheit eine dielektrische Leitfähigkeit $\varepsilon$ des Erntegutes ermittelt. In Abhängigkeit von der ermittelten Leitfähigkeit $\varepsilon$ wird in einer Signalverarbeitungseinheit die Dichte $\rho$ des Erntegutes ermittelt.

Die Auswerteeinheit kann eine spezifische Auswerteelektronik enthalten. Die Auswerteeinheit kann Bestandteil der Radar-Sensorik oder der Signalverarbeitungseinheit sein. Alternativ kann die Auswerteeinheit eine von der Radar-Sensorik und der Signalverarbeitungseinheit physisch getrennte Funktionseinheit sein.

Auf Basis einer Ermittlung der dielektrischen Leitfähigkeit $\varepsilon$ des Erntegutes lässt sich die Dichte des Erntegutes effizient mit geringem technischen Aufwand und hoher Genauigkeit ermitteln.

Dieses Verfahren für die Ermittlung einer Dichte bietet eine erhebliche Erleichterung während der Verdichtungsarbeit, insbesondere beim Aufbau eines Silos mit einem Erntegut. Beispielsweise wird der Fahrer einer landwirtschaftlichen Arbeitsmaschine (z.B. Traktor mit oder ohne separate Verdichtungsvorrichtung) beim wiederholten Abfahren der Silooberfläche deutlich entlastet, wenn er eine Ziel-Dichte oder Soll-Dichte des Erntegutes möglichst genau erreichen will.

Während der Verdichtungsarbeit kann durch wiederholtes Ausführen des Verfahrens die jeweils aktuell ermittelte Ist-Dichte mit einer Soll-Dichte (automatisch oder benutzerseitig) verglichen werden, so dass sich die Ist-Dichte des Erntegutes mit einem optimierten Aufwand an die gewünschte Soll-Dichte annähert. Hierdurch kann eine stabile Silage sehr effizient hergestellt werden. Folglich werden etwaige Verschlechterungen des Nährwertgehaltes der Silage bzw. Nährstoffverluste auf effiziente Weise vermieden.

Während der Verdichtungsarbeit muss im Wesentlichen nur ein Aussenden der Radarsignale in Richtung des verdichteten Erntegutes veranlasst werden, vorzugsweise automatisiert oder manuell (z.B. an einer Bedienungs-Schnittstelle, durch ein Betätigungselement, etc.). Die weiteren Verfahrensschritte bis zur Ermittlung der Dichte können mit geringem technischen Aufwand automatisch durchgeführt werden. Hierzu trägt die Signalverarbeitungseinheit vorzugsweise mit einem auf die Dichteermittlung abgestimmten Algorithmus oder mehreren entsprechenden Algorithmen bei.

Wie bereits erwähnt, wird mittels einer Auswertung der reflektierten und empfangenen Radarsignale eine dielektrische Leitfähigkeit $\varepsilon$ des Erntegutes ermittelt. Aus der dielektrischen Leitfähigkeit $\varepsilon$ wiederum wird die Dichte $\rho$ des Erntegutes ermittelt, insbesondere mittels spezifischer mathematischer Zusammenhänge und entsprechender Algorithmen. Hierbei können verschiedene, die Leitfähigkeit $\varepsilon$ beeinflussende Größen (z.B. Feuchtegehalt des Erntegutes, aktuelle Umgebungstemperatur) berücksichtigt werden.

Zur Ermittlung der Leitfähigkeit $\varepsilon$ werden reflektierte und empfangene Radarsignale insbesondere bezüglich unterschiedlicher Signallaufzeiten der Radarsignale, unterschiedlicher Frequenzanteile und unterschiedlicher Signalamplituden an reflektierenden unterschiedlichen Materialtiefen des Erntegutes berücksichtigt.

Zur Ermittlung der Dichte $\rho$ werden vorzugsweise die folgenden Zusammenhänge berücksichtigt. Die Leitfähigkeit $\varepsilon$ kann als komplexe Größe $\varepsilon = \varepsilon' + j\varepsilon''$ in einen Realteil $\varepsilon' = a\rho^2 + b\rho + 1$ und in einen Imaginärteil $\varepsilon'' = c\rho^2 + d\rho$ aufgeteilt werden. Die Faktoren a, b, c, d sind Materialparameter des Erntegutes, die beispielsweise durch vorherige Kalibrierungsmessungen (insbesondere bei einer bekannten Dichte $\rho$) empirisch ermittelt werden können. Ausgehend von diesem Real- und Imaginärteil kann mathematisch nach der Dichte $\rho$ gemäß der Gleichung

$$\rho = \frac{\alpha_f \epsilon' - \epsilon''}{\alpha_f k}$$

aufgelöst werden. Dabei ist der Faktor $\alpha_f$ von den vorgenannten Faktoren a, b, c, d abhängig und im Übrigen ein frequenzabhängiger Faktor bezüglich der eingesetzten Radarsignale. Außerdem ist der Faktor $\alpha_f$ konstant für ein vorgegebenes Biomaterial bzw. Erntegut. Die Größe k ist ebenfalls konstant für ein vorgegebenes Biomaterial bzw. Erntegut. Die Werte dieser beiden Größen können z.B. als Kalibrierdaten zur Verfügung stehen.

Verfahrensgemäß wird eine Radartechnologie zur Ermittlung der Dichte verwendet. Dabei wird insbesondere mit der Breitbandtechnologie (UWB) gearbeitet, so dass mehr Informationen hinsichtlich Form und Material der die Radarsignale in ihrer Tiefe reflektierenden Oberflächen verarbeitet werden können. Beispielsweise wird in einem Frequenzband von ca. 100 MHz bis 10 GHz gearbeitet. Insbesondere wird ein Frequenzbereich von etwa 6 bis 8 MHz für die Ermittlung der Dichte ρ ausgewertet.

Bei der landwirtschaftlichen Arbeitsmaschine handelt es sich z.B. um einen Traktor mit oder ohne Verdichtungsvorrichtung zur Verdichtung des Erntegutes. Als Verdichtungsvorrichtung können beispielsweise die Fahrzeugreifen des Traktors dienen. Alternativ oder zusätzlich kann eine separate, mit dem Traktor gekoppelte Verdichtungsvorrichtung (z.B. Verdichtungsgerät, Silowalze) vorgesehen sein.

Vorzugsweise werden die empfangenen reflektierten Radarsignale zunächst in einer technisch geeigneten Weise in Signale umgewandelt, welche die Leitfähigkeit ε repräsentieren und dann als Eingangssignale für die Signalverarbeitungseinheit zur Verfügung stehen bzw. von der Signalverarbeitungseinheit als Eingangssignale empfangen werden. Hierdurch bleibt der technische Aufwand für die Ermittlung der Dichte verhältnismäßig gering. Die Bearbeitung und Umwandlung der reflektierten Radarsignale in Eingangssignale für die Signalverarbeitungseinheit erfolgt vorzugsweise bereits in der Auswerteeinheit als ein Bestandteil der Radar-Sensorik, welche mit einem Signaleingang der Signalverarbeitungseinheit verbunden ist.

Neben den vorgenannten Eingangssignalen empfängt die Signalverarbeitungseinheit vorzugsweise weitere Signale bzw. Daten, wodurch die Genauigkeit bei der Dichteermittlung unterstützt wird. Insbesondere repräsentieren diese Daten mindestens einen der folgenden Parameter bzw. Merkmale:

- eine Kalibrierinformation,
- eine Umgebungstemperatur,
- ein Feuchtegehalt des Erntegutes,
- eine das Erntegut charakterisierende Information.

Die Kalibrierinformation enthält beispielsweise vorbekannte Kennlinien (z.B. Zusammenhang zwischen Leitfähigkeit ε und der Dichte ρ bei konstantem Feuchtegehalt des Erntegutes) oder durch Kalibrierungsmessungen ermittelte Werte für einzelne Konstanten und Parameter.

Die empfangene Umgebungstemperatur unterstützt eine technisch einfache Ermittlung eines Feuchtegehaltes des Erntegutes. Der Feuchtegehalt wiederum kann abhängig von der Signalverarbeitung in der Signalverarbeitungseinheit für die Dichteermittlung berücksichtigt werden und/oder für den Benutzer eine wertvolle Zusatzinformation für eine effiziente Verdichtungsarbeit sein. Der Feuchtegehalt ist vorzugsweise definiert als Verhältnis zwischen der Wassermasse und der Gesamtmasse des Erntegutes.

Eine das Erntegut bzw. das Biomaterial charakterisierende Information beinhaltet beispielsweis eine Information über die Pflanzenart (z.B. Gras, Mais, Getreide) oder die jeweilige Sorte oder deren Vegetationszustand. Eine weitere Information ist beispielsweise eine Schnittlänge oder Häcksellänge des Erntegutes.

Vorzugsweise werden die vorgenannten Daten zumindest teilweise von einer Bedienungs-Schnittstelle einer Arbeitsvorrichtung (z.B. landwirtschaftliche Arbeitsmaschine, mobiles Endgerät) und/oder von mindestens einer Datenquelle an die Signalverarbeitungseinheit gesendet. Somit kann eine Übertragung der Daten an die Signalverarbeitungseinheit mit geringem technischen Aufwand teil- oder vollautomatisiert durchgeführt werden, was den Benutzer (z.B. als Fahrer der Arbeitsmaschine) während der Verdichtungsarbeit weiter entlastet.

Bei der vorerwähnten Datenquelle handelt es sich beispielsweise um ein externes Datenzentrum, welches über eine Funkverbindung mit der Signalverarbeitungseinheit oder mit einer die Signalverarbeitungseinheit enthaltenden Steuereinheit kommuniziert. In einer weiteren Ausführungsform weist die Datenquelle eine Datenspeicher auf und ist physisch in bzw. an einer Arbeitsvorrichtung (z.B. landwirtschaftliche Arbeitsmaschine, mobiles Endgerät) angeordnet. Hier ist die Datenübertragung zwischen der Datenquelle und der Signalverarbeitungseinheit vorzugsweise draht- oder kabelgebunden.

Vorzugsweise gibt die Signalverarbeitungseinheit Ausgangssignale aus, welche die ermittelte Dichte ρ repräsentieren. Diese Ausgangssignale können (ggf. in umgewandelter Form) dem Benutzer auf geeignete Weise signalisiert werden, beispielsweise mittels einer optischen (z.B. Bildschirm, Display) und/oder akustischen Einheit. Diese Signalisierung kann beispielsweise Zahlenwerte, einen optischen Fortschrittsbalken oder mehrfarbigen Balken mit Anzeige einer Soll-Dichte oder eine Sprachausgabe beinhalten.

In einer zusätzlichen Funktion kann die Signalverarbeitungseinheit vorzugsweise dazu genutzt werden, ausgehend von einer Verarbeitung von Daten (z.B. der aktuellen Umgebungstemperatur) auch ohne Kenntnis des aktuellen Feuchtegehalts des Erntegutes Ausgangssignale auszugeben, welche einen Feuchtegehalt W des Erntegutes repräsentieren. Diese Ausgangssignale können einem Benutzer ebenfalls, wie bereits erläutert, auf geeignete Weise signalisiert werden. Die Signalisierung des Feuchtegehalts unterstützt den Benutzer effizient bei der Beurteilung des Erntegutes während der Verdichtungsarbeit.

Zur Ermittlung des Feuchtegehalts W werden vorzugsweise die folgenden Zusammenhänge berücksichtigt. Der Feuchtegehalt W kann aus der Gleichung

$$W = b_1\, \psi + b_2\, T + b_3$$

berechnet werden. Dabei ist T die bereits erwähnte Umgebungstemperatur und b1, b2, b3 sind Konstanten. Die Werte dieser Konstanten können z.B. als Kalibrierdaten zur Verfügung gestellt werden. Die Größe $\psi$ kann als Gleichung

$$\psi = \sqrt{\frac{\epsilon''}{\epsilon'(\alpha_f \epsilon' - \epsilon'')}}$$

definiert werden. Da die Werte sämtlicher in der Gleichung enthaltenen Größen aufgrund der vorbeschriebenen Zusammenhänge bekannt sind, kann auch der Wert der Größe $\psi$ berechnet werden.

Das Verfahren zur Ermittlung der Dichte wird vorzugsweise mittels einer geeigneten technischen Anordnung durchgeführt.

Diese Anordnung enthält zumindest eine Sendeeinheit einer Radar-Sensorik zur Aussendung von in das Erntegut eindringenden Radarsignalen, eine Empfangseinheit einer Radar-Sensorik zum Empfangen der vom Erntegut reflektierten Radarsignale, eine Auswerteeinheit zur Ermittlung einer dielektrischen Leitfähigkeit $\epsilon$ des Erntegutes und eine Signalverarbeitungseinheit zur Ermittlung der Dichte $\rho$ des Erntegutes in Abhängigkeit von der Leitfähigkeit $\epsilon$.

Die Sendeeinheit für die gesendeten Radarsignale und die Empfangseinheit für die empfangenen reflektierten Radarsignale sind Bestandteil der Radar-Sensorik, wodurch ein kompakter Aufbau der Anordnung zur Durchführung des Verfahrens unterstützt wird.

In einer weiteren bevorzugten Ausführungsform ist die Signalverarbeitungseinheit Bestandteil einer Steuereinheit oder bildet diese Steuereinheit. Die Steuereinheit steuert die Ermittlung der Dichte des Erntegutes. Die Steuereinheit enthält vorzugsweise übliche Funktionseinheiten wie etwa eine Mikroprozessoreinheit, eine Speichereinheit, etc. und kann steuerungstechnisch eine automatisierte und effiziente Durchführung des Verfahrens unterstützen. Beispielsweise kann die Steuereinheit die Aktivitäten der Sendeeinheit und der Empfangseinheit sowie die Kommunikation mit der vorgenannten Bedienungs-Schnittstelle und/oder Datenquelle steuern.

Die Steuereinheit kann vorteilhaft auch dazu genutzt werden, in Abhängigkeit von der ermittelten Dichte und/oder in Abhängigkeit von dem ermittelten Feuchtegehalt W eine arbeitsbezogene Funktion während der Verdichtungsarbeit zu steuern. Dies ist beispielsweise eine dichteabhängige Signalisierung weiterer spezifischer Informationen für den Benutzer. In einer weiteren Ausführung ist die arbeitsbezogene Funktion eine Fahrzeug- bzw. Maschinenfunktion der landwirtschaftlichen Arbeitsmaschine. In diesem Fall kann die Steuereinheit in Abhängigkeit von der ermittelten Dichte und/oder des ermittelten Feuchtegehalts die weitere Verdichtungsarbeit anpassen, z.B. die Fahrgeschwindigkeit mittels einer Ansteuerung des Motor-Steuergerätes oder die Verdichtungsintensität einer mit der Arbeitsmaschine gekoppelten Verdichtungsvorrichtung steuern. Durch wiederholtes Ermitteln der Dichte und optional des Feuchtegehalts kann die Verdichtungsarbeit mittels der Steuereinheit präzise nachjustiert werden. Diese Nachjustierung erfolgt z.B. durch einen automatisierten (und ggf. wiederholten) Vergleich zwischen der ermittelten aktuellen Ist-Dichte und einer vorbestimmten Soll-Dichte. Bei Erreichen oder Unterschreiten einer vorbestimmten Differenz zwischen der Ist-Dichte und der Soll-Dichte kann dann die Verdichtungsarbeit beendet werden.

Entsprechend der vorstehenden Erläuterungen findet die Anordnung zur Durchführung des Verfahrens vorzugsweise Einsatz in einer landwirtschaftlichen Arbeitsmaschine. Dort kann die Anordnung zur Durchführung des Verfahrens mit geringem technischen Aufwand mit einer Bedienungs-Schnittstelle (z.B. Bildschirm, Tastatur) der Arbeitsmaschine und/oder einem Positionserfassungssystem (z.B. GPS) der Arbeitsmaschine und/oder einem Bussystem (z.B. CAN) der Arbeitsmaschine und/oder einer externen Datenquelle signal-/datentechnisch gekoppelt werden. Zur Kopplung dient vorzugsweise die bereits erwähnte Steuereinheit der Anordnung als signal-/datentechnische Schnittstelle.

Die Anordnung zur Durchführung des Verfahrens, insbesondere deren Radar-Sensorik, wird an einer geeigneten Stelle der Arbeitsmaschine montiert, so dass während der Verdichtungsarbeit der fahrenden Arbeitsmaschine die Dichte des Erntegutes automatisch und permanent ermittelt werden kann.

Alternativ kann die Anordnung zur Durchführung des Verfahrens in einem tragbaren bzw. mobilen Endgerät verwendet werden. Dies erlaubt dem Benutzer während der Verdichtungsarbeit individuelle manuelle Messungen der Dichte und optional auch des Feuchtegehalts des Erntegutes.

Das erfindungsgemäße Verfahren und eine Anordnung zur Durchführung des Verfahrens werden im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1 eine schematische Darstellung einer radarbasierten Signalverarbeitung zur Ermittlung einer Dichte des Erntegutes,

Fig. 2 eine schematische Darstellung einer Radar-Sensorik zur Ermittlung der Dichte des Erntegutes,

Fig. 3 eine schematische blockschaltbildartige Darstellung von Funktionseinheiten für eine landwirtschaftliche Arbeitsmaschine zur Durchführung des erfindungsgemäßen Verfahrens, und

Fig. 4 eine schematische blockschaltbildartige Darstellung von Funktionseinheiten für ein mobiles Endgerät zur Durchführung des erfindungsgemäßen Verfahrens.

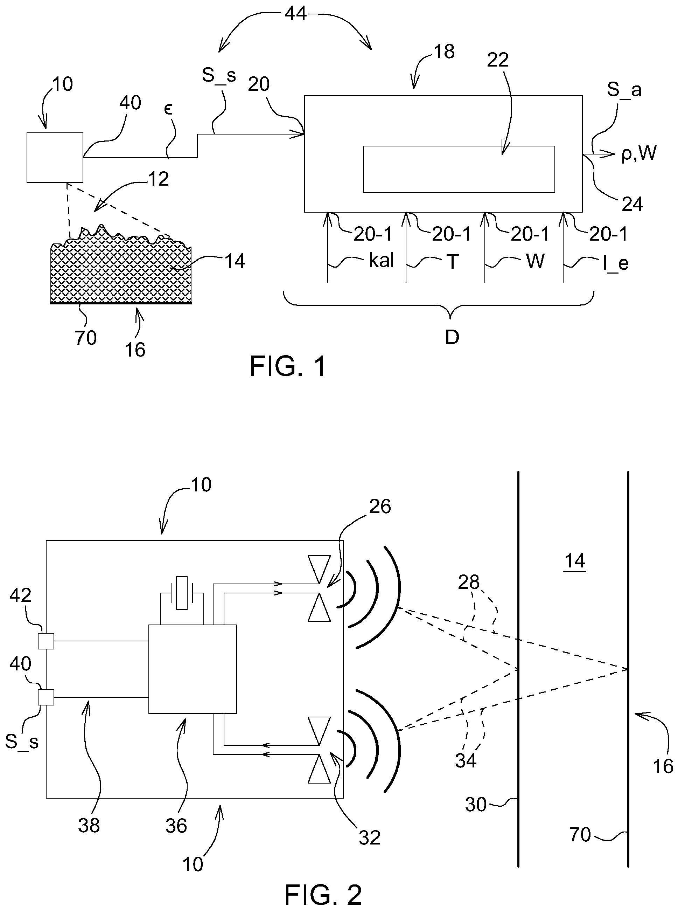

Fig. 1 zeigt eine Radar-Sensorik 10 zum Aussenden und Empfangen von Radarsignalen innerhalb eines Sende- und Empfangsbereiches 12. Dabei werden Radarsignale in Richtung eines Biomaterials bzw. Erntegutes 14 gesendet, welches in einem Silo 16 gelagert ist. In Abhängigkeit von einer ermittelten Dichte $\rho$ des Erntegutes 14 wird dieses entweder weiter verdichtet oder die Verdichtungsarbeit wird beendet.

Für die Ermittlung der Dichte $\rho$ des Erntegutes 14 generiert die Sensorik 10 zunächst spezifische Sensorsignale S_s auf Basis der gesendeten und empfangenen Radarsignale. Die Sensorsignale S_s werden von einer Signalverarbeitungseinheit 18 an einem Signaleingang 20 empfangen. Sie Sensorsignale S_s oder davon abgeleitete Signale werden gemeinsam mit weiteren Daten D in einem bzw. mehreren spezifischen Algorithmen 22 verarbeitet. Das Ergebnis dieser Signalverarbeitung wird an einem Signalausgang 24 der Signalverarbeitungseinheit 18 als Ausgangssignale S_a ausgegeben. Ausgegebene Ausgangssignale S_a repräsentieren insbesondere die Dichte $\rho$ oder einen Feuchtegehalt W des Erntegutes 14.

Die von der Signalverarbeitungseinheit 18 an einem zusätzlichen Signaleingang 20-1 oder mehreren zusätzlichen Signaleingängen 20-1 empfangenen Daten D beinhalten insbesondere mindestens eine der folgenden Informationen oder Größen:

- eine Kalibrierinformation kal;
- eine Umgebungstemperatur T;
- ein Feuchtegehalt W des Erntegutes 14;
- eine das Erntegut 14 charakterisierende Information I_e.

Die vorgenannten Informationen oder Größen können teilweise von Datenquellen abgerufen werden oder sie können durch Messungen zur Verfügung gestellt werden. Wie bereits erwähnt, müssen nicht zwangsläufig sämtliche der vorgenannten Informationen bzw. Größen für die Signalverarbeitungseinheit 18 zur Verfügung stehen. Beispielsweise handelt es sich bei dem Feuchtegehalt W und bei der das Erntegut 14 charakterisierenden Information I_e um Informationen, welche jeweils nur optional von der Signalverarbeitungseinheit 18 empfangen werden. Weiterhin optional können die Daten D auch andere, hier nicht genannte Informationen bzw. Größen beinhalten.

Für die Ermittlung der Dichte $\rho$ und des Feuchtegehalts W werden in der Signalverarbeitungseinheit 18 bzw. in deren Algorithmen 22 vorzugsweise folgende mathematisch-physikalische Zusammenhänge berücksichtigt:
Es wird von der Überlegung ausgegangen, dass mittels einer Verarbeitung von an dem Erntegut 14 reflektierten Radarsignalen eine dielektrische Leitfähigkeit $\varepsilon$ des Erntegutes 14 bestimmt werden kann. Die Leitfähigkeit $\varepsilon$ ist von dem Feuchtegehalt W abhängig. Zur Berücksichtigung dieser Abhängigkeit wird die Leitfähigkeit $\varepsilon$ als komplexe Größe $\varepsilon = \varepsilon' + j\varepsilon''$ in einen Realteil $\varepsilon' = a\rho^2 + b\rho + 1$ und in einen Imaginärteil $\varepsilon'' = c\rho^2 + d\rho$ aufgeteilt. Die Faktoren a, b, c, d sind Materialparameter des Erntegutes 14, die beispielsweise durch vorherige Kalibrierungsmessungen (insbesondere bei einer bekannten Dichte $\rho$) empirisch ermittelt werden können.

Ausgehend von diesem Real- und Imaginärteil kann mathematisch nach der Dichte $\rho$ gemäß der Gleichung

$$\rho = \frac{\alpha_f \epsilon' - \epsilon''}{\alpha_f k}$$

aufgelöst werden. Dabei ist der Faktor $\alpha_f$ von den vorgenannten Faktoren a, b, c, d abhängig und im Übrigen ein frequenzabhängiger Faktor bezüglich der eingesetzten Radarsignale. Außerdem ist der Faktor $\alpha_f$ konstant für ein vorgegebenes Biomaterial bzw. Erntegut 14. Die Größe k ist ebenfalls konstant für ein vorgegebenes Biomaterial bzw. Erntegut 14. Die Werte dieser beiden Größen können z.B. in einer Speichereinheit der Signalverarbeitungseinheit 18 abrufbar sein oder über die Informationen kal bzw. I_e der Signalverarbeitungseinheit 18 mitgeteilt werden. Somit kann die Dichte $\rho$ auch ohne Kenntnis des aktuellen Feuchtegehalts W ermittelt werden.

Die vorgenannten Zusammenhänge ermöglichen es, mit relativ geringem rechnerischen Aufwand in der Signalverarbeitungseinheit 18 parallel zur Ermittlung der Dichte $\rho$ auch den Feuchtegehalt W zu ermitteln. Der Feuchtegehalt W kann aus der Gleichung

$$W = b_1 \, \psi + b_2 \, T + b_3$$

berechnet werden. Dabei ist T die bereits erwähnte Umgebungstemperatur und b1, b2, b3 sind Konstanten. Die Werte dieser Konstanten können z.B. in einer Speichereinheit der Signalverarbeitungseinheit 18 abrufbar sein oder über die Informationen kal bzw. I_e der Signalverarbeitungseinheit 18 mitgeteilt werden.

Die Größe $\psi$ kann als Gleichung

$$\psi = \sqrt{\frac{\epsilon''}{\epsilon'(\alpha_f \epsilon' - \epsilon'')}}$$

definiert werden. Da die Werte sämtlicher in der Gleichung enthaltenen Größen aufgrund der vorbeschriebenen Zusammenhänge bekannt sind, kann auch der Wert der Größe $\psi$ berechnet werden.

In Fig. 2 ist ein Ausführungsbeispiel der Radar-Sensorik 10 dargestellt. Von einer Sendeeinheit 26 der Sensorik 10 werden Radarsignale 28 in Richtung des Erntegutes 14 gesendet. Ein Teil der Radarsignale 28 trifft auf einer (schematisch lediglich geradlinig dargestellten) Oberfläche 30 des Erntegutes 14 auf und wird dort reflektiert. Andere Anteile der Radarsignale 28 dringen tiefer in das Erntegut 14 ein und werden dort reflektiert. Wiederum andere Anteile der Radarsignale 28 werden an einer Begrenzungsfläche des Silos 16 (z.B. an einer Silo-Bodenplatte 70) reflektiert. Eine Empfangseinheit 32 der Sensorik 10 empfängt die reflektierten Radarsignale 34. In einer Auswerteeinheit in Form einer Elektronik 36 der Sensorik 10 werden die empfangenen Radarsignale 34 verarbeitet. Aus dieser Verarbeitung oder Signalumsetzung generiert die Elektronik 36 Signale, die durch eine oder mehrere interne Signalleitung(en) 38 an einen Sensorikanschluss 40 übertragen werden und dort als Sensorsignale S_s zur Verfügung stehen. Die Sensorsignale S_s werden dann als Eingangssignale von der Signalverarbeitungseinheit 18 empfangen. Vorzugsweise repräsentieren die Sensorsignale S_s bereits die Leitfähigkeit $\varepsilon$.

Über einen elektrischen Spannungsanschluss 42 wird die Elektronik 36 mit elektrischer Energie versorgt.

Die Sensorik 10 und die Signalverarbeitungseinheit 18 bilden Bestandteile einer technischen Anordnung 44 zur Ermittlung der Dichte $\rho$ und optional des Feuchtegehalts W des Erntegutes 14. Die Anordnung 44 kann mit unterschiedlichen Funktionseinheiten ergänzt sein und verschiedene Verwendungszwecke haben.

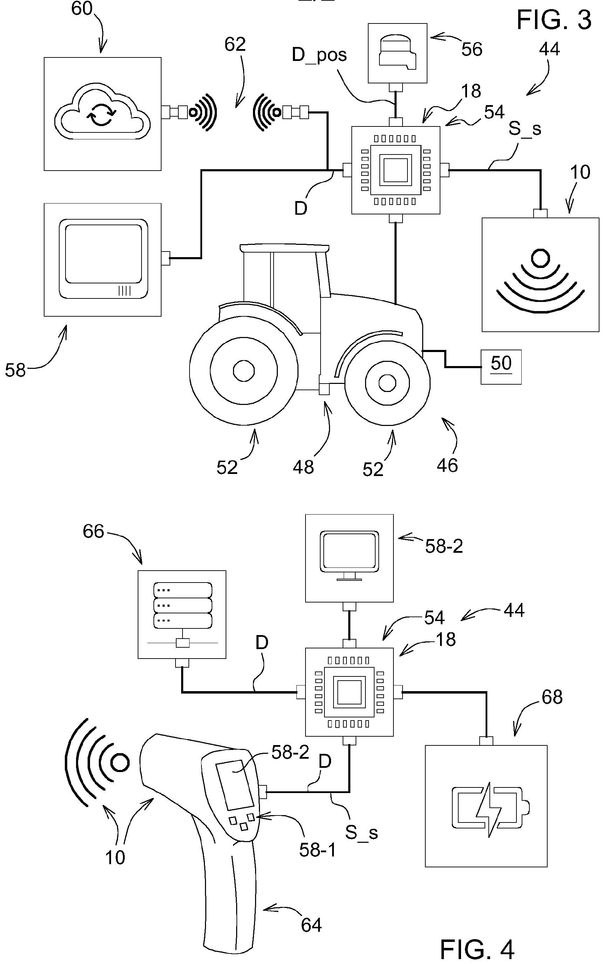

In Fig. 3 ist die Anordnung 44 in einer landwirtschaftlichen Arbeitsmaschine 46 integriert. Letztere weist einen Traktor 48 und eine daran frontseitig gekoppelte Verdichtungsvorrichtung 50 auf. Die Verdichtungsvorrichtung 50 ist lediglich schematisch als ein Block dargestellt, welcher stellvertretend für unterschiedliche Ausführungsformen steht, z.B. für eine Silo-Verdichtungswalze. Auch wenn die Verdichtungsvorrichtung 50 in Fig. 1 frontseitig am Traktor 48 montiert ist, sind in alternativen oder ergänzenden Varianten auch heckseitig montierte Verdichtungsvorrichtungen 50 denkbar. In einer weiteren Variante kann der Traktor 48 auch ohne separate Verdichtungsvorrichtung 50 ausgestattet sein und die Verdichtungsarbeit mittels seiner Reifen 52 durchführen. Der Traktor 48 kann in weiteren Ausführungsformen durch ein anderes geeignetes selbstfahrendes Fahrzeug ersetzt sein.

Eine in der Arbeitsmaschine 46, im Ausführungsbeispiel genauer gesagt im Traktor 48, integrierte Steuereinheit 54 enthält die Signalverarbeitungseinheit 18 oder bildet die Signalverarbeitungseinheit 18. Somit ist die Steuereinheit 54 Bestandteil der Anordnung 44. Die Signalverarbeitungseinheit 18 empfängt über die Steuereinheit 54 verschiedene Daten D zur Datenverarbeitung, insbesondere zur Ermittlung der Dichte $\rho$ und ggf. auch des Feuchtegehalts W. Optional empfängt die Steuereinheit 54 bzw. die Signalverarbeitungseinheit 18 auch Positionsdaten D_pos eines Positionserfassungssystems 56 (z.B. GPS) der Arbeitsmaschine 10.

Die Daten D können von einer im Traktor 48 integrierten Bedienungs-Schnittstelle 58 (z.B. optische Anzeigeeinheit, Bildschirm, Eingabeeinheit, etc.) beispielsweise manuell vorgegeben werden und/oder von einer externen Datenquelle 60 (z.B. externes Daten-/Rechenzentrum) über eine drahtlose Datenverbindung 62 (z.B. Mobilfunk) der Steuereinheit 54 bzw. der Signalverarbeitungseinheit 18 zur Verfügung gestellt werden.

Die Steuereinheit 54 unterstützt eine automatisierte Durchführung des Verfahrens, so dass die Dichte $\rho$ und ggf. der Feuchtegehalt W von der Steuereinheit 54 gesteuert ermittelt wird.

Darüber hinaus kann die Steuereinheit 54 dazu genutzt werden, in Abhängigkeit von der ermittelten Dichte $\rho$ und/oder in Abhängigkeit von dem ermittelten Feuchtegehalt W auch eine arbeitsbezogene Funktion während der Verdichtungsarbeit zu steuern, beispielsweise eine Fahrzeug- bzw. Maschinenfunktion der Arbeitsmaschine 46. In diesem Fall kann die Steuereinheit 54 in Abhängigkeit von der ermittelten Dichte $\rho$ und/oder des ermittelten Feuchtegehalts W die weitere Verdichtungsarbeit anpassen, z.B. durch Steuern der Fahrgeschwindigkeit des Traktors 48 oder durch Steuern der Verdichtungsintensität der mit dem Traktor 48 gekoppelten Verdichtungsvorrichtung 50.

In Fig. 4 ist die Anordnung 44 in einem mobilen, tragbaren Endgerät 64 integriert. Die Bedienungs-Schnittstelle 58 weist bei dieser Ausführungsform mehrere Funktionstasten 58-1 (z.B. für die Funktionen Ein/Aus, Start, Speichern) und eine visuelle Anzeigeeinheit 58-2 (z.B. LCD-Display) auf.

Die Daten D können bei dieser Ausführungsform von den Funktionstasten 58-1 manuell vorgegeben werden und/oder von einem Datenspeicher 66 als Datenquelle der Steuereinheit 54 bzw. der Signalverarbeitungseinheit 18 zur Verfügung gestellt werden. Hierbei ist der Datenspeicher 66 ein Bestandteil der Anordnung 44 innerhalb des Endgerätes 64.

Wie bereits beschrieben, werden auch im Falle des Endgerätes 64 die Sensorsignale S_s der Sensorik 10 an die Steuereinheit 54 bzw. an die Signalverarbeitungseinheit 18 weitergeleitet.

Ein im Endgerät 64 integrierter Energiespeicher 68 (z.B. Batterie, Akku) versorgt die elektrischen bzw. elektronischen Bestandteile (wie etwa die Sensorik 10 und die Steuereinheit 54) des Endgerätes 64 mit elektrischer Energie.

Der guten Ordnung halber sei erwähnt, dass in den Zeichnungen dargestellte schematische Details nicht notwendigerweise maßstäblich sind.

**Patentansprüche**

1.　Verfahren zur Ermittlung einer Dichte (p) eines Erntegutes (14) mittels einer Radar-Sensorik (10), wobei

- von einer Sendeeinheit (26) der Radar-Sensorik (10) in das verdichtete Erntegut (14) eindringende Radarsignale (28) gesendet werden, und
- von einer Empfangseinheit (32) der Radar-Sensorik (10) die von dem verdichteten Erntegut (14) reflektierten Radarsignale (34) empfangen werden,
**dadurch gekennzeichnet, dass**
- in Abhängigkeit von den empfangenen reflektierten Radarsignalen (34) in einer Auswerteeinheit (36) eine dielektrische Leitfähigkeit ($\varepsilon$) des Erntegutes (14) ermittelt wird, und
- in Abhängigkeit von der ermittelten Leitfähigkeit ($\varepsilon$) in einer Signalverarbeitungseinheit (18) die Dichte (p) des Erntegutes (14) ermittelt wird.

2. Verfahren nach Anspruch 1, **dadurch gekennzeichnet, dass** die empfangenen reflektierten Radarsignale (34) in Signale (S_s) umgewandelt werden, welche die ermittelte Leitfähigkeit ($\varepsilon$) repräsentieren und als Eingangssignale von der Signalverarbeitungseinheit (18) empfangen werden.

3. Verfahren nach Anspruch 1 oder 2, **dadurch gekennzeichnet, dass** die Signalverarbeitungseinheit (18) Daten (D) empfängt, welche mindestens eine der folgenden Informationen repräsentieren:

- eine Kalibrierinformation (kal),
- eine Umgebungstemperatur (T),
- ein Feuchtegehalt (W) des Erntegutes,
- eine das Erntegut (14) charakterisierende Information (I_e).

4. Verfahren nach Anspruch 3, **dadurch gekennzeichnet, dass** die Daten (D) zumindest teilweise von einer Bedienungs-Schnittstelle (58, 58-1) und/oder von einer Datenquelle (60, 66) an die Signalverarbeitungseinheit (18) gesendet werden.

5. Verfahren nach einem der vorhergehenden Ansprüche,
**dadurch gekennzeichnet, dass** die Signalverarbeitungseinheit (18) Ausgangssignale (S_a) ausgibt, welche die ermittelte Dichte (p) repräsentieren.

6. Verfahren nach einem der vorhergehenden Ansprüche,
**dadurch gekennzeichnet, dass** die Signalverarbeitungseinheit (18) Ausgangssignale (S_a) ausgibt, welche einen Feuchtegehalt (W) des Erntegutes (14) repräsentieren.

7. Anordnung (44) zur Ermittlung einer Dichte (p) eines Erntegutes (14) mit einer Radar-Sensorik (10), wobei die Radar-Sensorik (10)

- eine Sendeeinheit (26) enthält, welche in das verdichtete Erntegut (14) eindringende Radarsignale (28) sendet, und
- eine Empfangseinheit (32) enthält, welche von dem verdichteten Erntegut (14) reflektierte Radarsignale (34) empfängt,

**dadurch gekennzeichnet, dass**
die Anordnung (44)

- eine Auswerteeinheit (36) enthält, welche in Abhängigkeit von den empfangenen reflektierten Radarsignalen (34) eine dielektrische Leitfähigkeit ($\varepsilon$) des Erntegutes (14) ermittelt, und
- eine Signalverarbeitungseinheit (18) enthält, welche in Abhängigkeit von der ermittelten Leitfähigkeit ($\varepsilon$) die Dichte (p) des Erntegutes (14) ermittelt.

8. Anordnung nach Anspruch 7, **dadurch gekennzeichnet, dass** sie eine die Signalverarbeitungseinheit (18) bildende oder eine die Signalverarbeitungseinheit (18) enthaltende Steuereinheit (54) zur Steuerung der Ermittlung der Dichte (p) des Erntegutes (14) aufweist.

9. Anordnung nach Anspruch 7 oder 8, **dadurch gekennzeichnet, dass** sie in einer landwirtschaftlichen Arbeitsmaschine (48) verwendet wird.

10. Anordnung nach Anspruch 7 oder 8, **dadurch gekennzeichnet, dass** sie in einem tragbaren Endgerät (64) verwendet wird.

## Claims

1. Method for determining a density (p) of a harvested material (14) by means of a radar sensor system (10), wherein

- penetrating radar signals (28) are transmitted into the compacted harvested material (14) from a transmitting unit (26) of the radar sensor system (10), and
- the radar signals (34) reflected by the compacted harvested material (14) are received by a receiving unit (32) of the radar sensor system (10), **characterized in that**
- a permittivity ($\varepsilon$) of the harvested material (14) is determined as a function of the received reflected radar signals (34) in an evaluation unit (36), and
- the density ($\rho$) of the harvested material (14) is determined as a function of the determined permittivity ($\varepsilon$) in a signal processing unit (18).

2. Method according to Claim 1, **characterized in that** the received reflected radar signals (34) are converted into signals (S_s) which represent the determined permittivity (ε) and are received as input signals by the signal processing unit (18).

**3.** Method according to Claim 1 or 2, **characterized in that** the signal processing unit (18) receives data (D) which represent at least one of the following items of information:

- an item of calibration information (kal),
- an ambient temperature (T),
- a moisture content (W) of the harvested material,
- an item of information (I_e) characterizing the harvested material (14).

**4.** Method according to Claim 3, **characterized in that** the data (D) are at least partially transmitted from an operating interface (58, 58-1) and/or from a data source (60, 66) to the signal processing unit (18).

**5.** Method according to one of the preceding claims, **characterized in that** the signal processing unit (18) issues output signals (S_a) which represent the determined density (p).

**6.** Method according to one of the preceding claims, **characterized in that** the signal processing unit (18) issues output signals (S_a) which represent a moisture content (W) of the harvested material (14).

**7.** Arrangement (44) for determining a density (p) of a harvested material (14) by means of a radar sensor system (10), wherein the radar sensor system (10) includes

- a transmitting unit (26) which transmits penetrating radar signals (28) into the compacted harvested material (14), and
- a receiving unit (32) which receives radar signals (34) reflected by the compacted harvested material (14),

**characterized in that**
the arrangement (44) includes

- an evaluation unit (36) which determines a permittivity (ε) of the harvested material (14) as a function of the received reflected radar signals (34), and
- a signal processing unit (18) which determines the density (p) of the harvested material (14) as a function of the determined permittivity (ε).

**8.** Arrangement according to Claim 7, **characterized in that** it has a control unit (54) forming the signal processing unit (18) or including the signal processing unit (18) for controlling the determination of the density (p) of the harvested material (14).

**9.** Arrangement according to Claim 7 or 8, **characterized in that** it is used in an agricultural machine (48).

**10.** Arrangement according to Claim 7 or 8, **characterized in that** it is used in a portable terminal (64).

**Revendications**

**1.** Procédé de détermination d'une densité (p) d'un produit récolté (14) au moyen d'un système de détection radar (10),

- des signaux radar (28) pénétrant dans le produit récolté (14) compacté étant émis par une unité d'émission (26) du système de détection radar (10), et
- les signaux radar (34) réfléchis par le produit récolté (14) compacté étant reçus par une unité de réception (32) du système de détection radar (10),
**caractérisé en ce que**
- une conductivité (ε) diélectrique du produit récolté (14) est déterminée dans une unité d'évaluation (36) en fonction des signaux radar (34) réfléchis reçus, et
- la densité (p) du produit récolté (14) est déterminée dans une unité de traitement de signal (18) en fonction de la conductivité (ε) déterminée.

**2.** Procédé selon la revendication 1, **caractérisé en ce que** les signaux radar (34) réfléchis reçus sont convertis en signaux (S_s) qui représentent la conductivité (ε) déterminée et sont reçus en tant que signaux d'entrée par l'unité de traitement de signal (18).

**3.** Procédé selon la revendication 1 ou 2, **caractérisé en ce que** l'unité de traitement de signal (18) reçoit des données (D) qui représentent au moins l'une des informations suivantes :

- une information d'étalonnage (kal),
- une température ambiante (T),
- une teneur en humidité (W) du produit récolté,
- une information (I_e) qui caractérise le produit récolté (14).

**4.** Procédé selon la revendication 3, **caractérisé en ce que** les données (D) sont envoyées au moins en partie à l'unité de traitement de signal (18) par une interface de commande (58, 58-1) et/ou par une source de données (60, 66) .

**5.** Procédé selon l'une des revendications précédentes, **caractérisé en ce que** l'unité de traitement de signal (18) délivre des signaux de sortie (S_a) qui représentent la densité (p) déterminée.

6. Procédé selon l'une des revendications précédentes, **caractérisé en ce que** l'unité de traitement de signal (18) délivre des signaux de sortie (S_a) qui représentent une teneur en humidité (W) du produit récolté (14).

7. Arrangement (44) de détermination d'une densité (p) d'un produit récolté (14) avec un système de détection radar (10), le système de détection radar (10)

    - contenant une unité d'émission (26) qui émet des signaux radar (28) qui pénètrent dans le produit récolté (14) compacté, et
    - contenant une unité de réception (32) qui reçoit des signaux radar (34) réfléchis par le produit récolté (14) compacté,

**caractérisé en ce que**
l'arrangement (44)

    - contient une unité d'évaluation (36) qui détermine une conductivité ($\varepsilon$) diélectrique du produit récolté (14) en fonction des signaux radar (34) réfléchis reçus, et
    - contient une unité de traitement de signal (18) qui détermine la densité (p) du produit récolté (14) en fonction de la conductivité ($\varepsilon$) déterminée.

8. Arrangement selon la revendication 7, **caractérisé en ce qu'**il possède une unité de commande (54) formant l'unité de traitement de signal (18) ou contenant l'unité de traitement de signal (18) pour commander la détermination de la densité (p) du produit récolté (14).

9. Arrangement selon la revendication 7 ou 8, **caractérisé en ce qu'**il est utilisé dans une machine de travail agricole (48).

10. Arrangement selon la revendication 7 ou 8, **caractérisé en ce qu'**il est utilisé dans un terminal portable (64).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020110297 A1